**Europäisches Patentamt**

(19) **European Patent Office**

**Office européen des brevets**

(11) Veröffentlichungsnummer: **0 175 993**
**B1**

(12) **EUROPÄISCHE PATENTSCHRIFT**

(45) Veröffentlichungstag der Patentschrift:
28.10.87

(51) Int. Cl.⁴: **H 02 K 5/14, H 01 R 39/39**

(21) Anmeldenummer: 85111382.9

(22) Anmeldetag: 09.09.85

(54) Hammer-Bürstenhaltersystem für einen Kommutatormotor.

(30) Priorität: 19.09.84 DE 3434390

(43) Veröffentlichungstag der Anmeldung:
02.04.86 Patentblatt 86/14

(45) Bekanntmachung des Hinweises auf die Patenterteilung:
28.10.87 Patentblatt 87/44

(84) Benannte Vertragsstaaten:
DE FR GB IT SE

(56) Entgegenhaltungen:
EP - A - 0 105 392
FR - A - 2 328 308
FR - A - 2 341 965
FR - A - 2 490 886

(73) Patentinhaber: Siemens Aktiengesellschaft Berlin und München, Wittelsbacherplatz 2, D-8000 München 2 (DE)

(72) Erfinder: Kirchner, Albert, Dipl.-Ing., Am Feldtor 16, D-8720 Schweinfurt (DE)
Erfinder: Schön, Jürgen, Bei der Feldmühle 14, D-8700 Würzburg (DE)
Erfinder: Happ, Ortwin, Bergstrasse 1, D-8702 Rossbrunn (DE)

ACTORUM AG

# Beschreibung

Die Erfindung bezieht sich auf ein Hammer-Bürstenhaltersystem für einen Kommutatormotor gemäss Oberbegriff des Anspruchs 1; ein derartiges Hammer-Bürstenhaltersystem ist aus der DE-OS 30 23 803 bekannt.

Bei dem bekannten Hammer-Bürstenhaltersystem sind die Bürstentragarme mit an ihrem einen Ende angeformter offener Lagerschale auf die freien Enden axial an eine Bürstentragplatte angeformter Halterungsschienen eingehängt und durch eine zwischen den Hammerbürstenhaltern eingehängte bzw. eingespannte Zugfeder über an ihren anderen Enden in angespritzte Taschen eingesteckte Bürsten an den Kommutator gedrückt. Zur axialen Lagesicherung ist auf die freien Enden der zuvor mit den eingehängten Bürstentragarmen versehenen Halterungsschiene eine in bestimmter Weise geformte Endplatte selbstsperrend aufgesteckt. Die in eine axiale Gehäuseöffnung stirnseitig mittels angeformter Führungs-Randschlitze einschiebbare Bürstentragplatte mit den angeformten Halterungsschienen für die schwenkbare Lagerung der Bürstentragarme ist als ein mit nur in axialer Richtung entformbaren Formstempeln herstellbares und in nur einer axialen Richtung bestückbares einstückiges Kunststoff-Spritzgussteil ausgebildet.

Gemäss Aufgabe vorliegender Erfindung soll die Zahl der Handhabungsgriffe zur Herstellung und Montage des Hammer-Bürstenhaltersystems für eine vollautomatische Fertigungsstrasse weiter verringert werden.

Die Lösung dieser Aufgabe gelingt bei einem Hammer-Bürstenhaltersystem der eingangs genannten Art durch die Lehre des Anspruchs 1; die Gegenstände der Unteransprüche kennzeichnen jeweils vorteilhafte Ausgestaltungen dieser Lehre.

Das erfindungsgemässe Hammerbürstensystem erlaubt eine eindeutig fixierbare Montage der Bürstentragarme an der Bürstenbrücke mit nur einer einzigen, in axialer Richtung zu betätigenden Handhabung. Eine weitere Vereinfachung bei gleichzeitigem Aufsetzen beider Bürstentragarme sowie dem Einsetzen der mit den beiden Bürstentragarmen bestückten Bürstenbrücke in das Gehäuse sowie die Montage des Motorläufers ist dadurch möglich, dass die beiden Bürstentragarme Teile eines einstückigen Gussteils, insbesondere Kunststoff-Spritzgussteils, mit einem mitgegossenen, die beiden Bürstentragarme auf bestimmten gegenseitigen Abstand haltenden, ausbrechbaren Brückensteg sind, wobei zweckmässigerweise die beiden Bürstentragarme durch den Brückensteg in einem solchen gegenseitigen Abstand gehalten sind, dass die beiden Bürstentragarme mit ihren ösenartigen Enden gleichzeitig auf die Zapfen axial aufsteckbar und zwischen ihre bürstenseitigen mit den Bürsten bestückten Enden der Kommutator des Läufers des Kommutatormotors axial frei einführbar ist. Nach der Gesamtbestückung des Motors und gegebenenfalls vor dem Einschleifen des montierten Bürstensystems wird dann der Brückensteg zwischen den beiden Bürstentragarmen auf einfache Weise ausgebrochen; dadurch werden die Bürsten zur Auflage auf den Kommutator freigegeben. Durch die bereits beim Spritzen festgelegte gegenseitige Position der beiden Bürstentragarme zueinander wird auch die Bestükkung mit weiteren Bauteilen, z.B. Entstördrosseln, sowie deren gegenseitige Verschaltung untereinander und mit den Bürsten beider Bürstentragarme sowie mit einem äusseren Anschlussstecker wesentlich vereinfacht.

Die Zahl der durch Automaten zu bewerkstelligenden Montageschritte kann dadurch weiter vermindert werden, dass nach einer weiteren Ausgestaltung der Erfindung die Bürsten in Taschen an den bürstenseitigen Enden der Bürstentragarme miteingespritzt sind und somit als Bestandteil der Bürstenhalter angeliefert und mit diesen einstückig montiert werden können. Zur einfachen Montage der an den Bürstentragarmen zu befestigenden Enden der Zugfeder sind an die Bürstentragarme axial verlaufende Stifte mit axial freien Enden einstückig angeformt, auf die die Zugfeder mit ösenartig ausgebildeten Enden aufsteckbar und selbstsperrend aufrastbar gehalten ist. Im Sinne einer vorteilhaften sogenannten Aufbaumontage sind die Bürstentragplatte mit den angeformten Zapfen und Rastmitteln zur axialen Festlegung der montierten Bürstentragarmen bzw. die Bürstentragarme selbst mit angeformten Taschen zur Aufnahme von Entstörmitteln sowie mit den zwischengeformten Brückenstegen jeweils als ein mit nur in axialer Richtung giesstechnisch entformbares und nur in einer axialen Richtung bestückbares Bauteil ausgebildet.

Die Erfindung sowie weitere vorteilhafte Ausgestaltungen werden im folgenden anhand eines schematisch dargestellten Ausführungsbeispiels in der Zeichnung näher erläutert. Darin zeigen:

Fig. 1 eine stirnseitige Draufsicht auf ein in eine axiale Gehäuseöffnung eingeschobenes Hammer-Bürstenhaltersystem,

Fig. 2 einen axialen Längsschnitt durch das Hammer-Bürstenhaltersystem in Fig. 1 gemäss dem Schnittverlauf II-II in Fig. 3,

Fig. 3 eine stirnseitige Draufsicht auf die noch nicht bestückte Bürstenbrücke aus Fig. 1,

Fig. 4 einen axialen Längsschnitt durch die Bürstenbrücke gemäss Fig. 2,

Fig. 5 eine motorseitige radiale Draufsicht auf die Bürstenbrücke gemäss Fig. 3,

Fig. 6 eine Seitenansicht eines einzelnen Bürstentragarms,

Fig. 7 einen Längsschnitt durch den in Fig. 6 dargestellten Bürstentragarm,

Fig. 8 zwei in ihrer gegenseitigen Position durch einen Brückensteg fixierte und mit eingegossenen Bürsten versehene Bürstentragarme eines Hammer-Bürstenhaltersystems,

Fig. 9 einen Querschnitt durch einen einzelnen Bürstentragarm in Fig. 6 gemäss Schnittverlauf IX-IX,

Fig. 10 einen Querschnitt durch den einzelnen Bürstentragarm in Fig. 6 gemäss Schnittverlauf X-X.

2

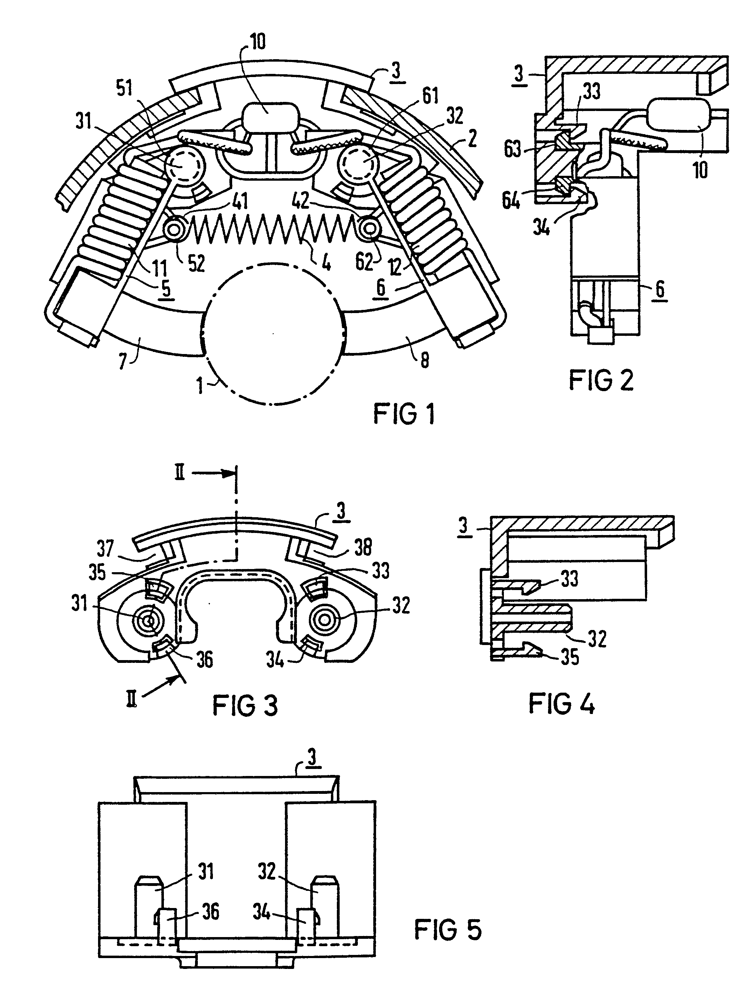

In Fig. 1 ist in einem Teilschnitt ein Motorgehäuse 2 eines Kommutatormotors in geschlossener Bauart angedeutet; in eine stirnseitig offene axiale Öffnung des Motorgehäuses 2 ist von der Stirnseite her eine im Schnitt dargestellte Bürstbrücke 3 geringer radialer, in der Grössenordnung mit der radialen Dicke des Motorgehäuses 2 vergleichbarer Wandstärke eingeschoben und kann in hier nicht näher dargestellter Weise durch das nach dem Einschieben gegengelegte Lagerschild endgültig festgelegt werden. Zur Führung und gleichzeitigen Abdichtung der axialen Öffnung des Motorgehäuses 2 übergreift die Bürstenbrücke 3 zusätzlich in Umfangsrichtung die axiale Öffnung sowohl an der Aussen- als auch an der Innenseite des Motorgehäuses 2 mit Randschlitzen 37, 38.

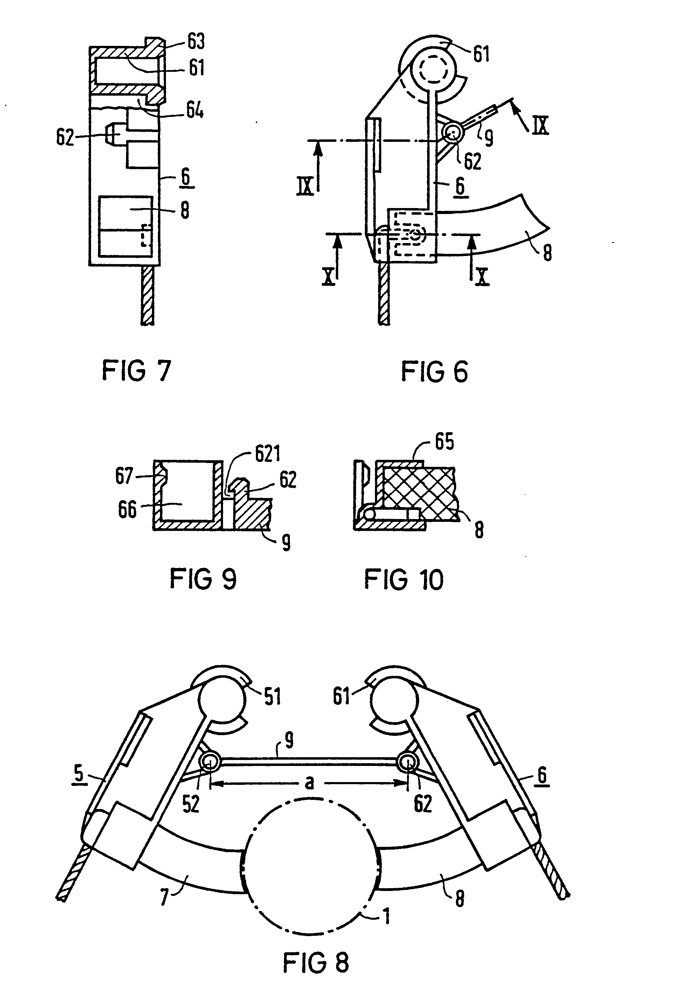

An die Rückwand der Bürstenbrücke 3 sind axial gerichtete Zapfen 31, 32 angeformt, auf die von ihrem freien Ende her Bürstentragarme 5, 6 mit hülsenförmigen Enden 51, 61 soweit aufgesteckt sind, bis sie mit angeformten Nasen 63, 64 hinter entsprechende an die Bürstenbrücke 3 angeformte Rastnocken 33, 34 bzw. 35, 36 einrasten und dadurch die schwenkbar an den Zapfen 31, 32 gelagerten Bürstentragarme 5, 6 axial fixiert sind. Wie insbesondere aus Fig. 1 und Fig. 2 ersichtlich, sind in die Bürstenbrücke 3 als Entstörmittel ein Kondensator 10 und an beiden Bürstentragarmen 5, 6 je eine Entstördrossel 11 bzw. 12 gehalten. Wie aus Fig. 9 ersichtlich, weisen die Bürstentragarme 5, 6 im Bereich der Halterung für die Entstördrosseln taschenförmige Ausnehmungen 66 auf, in die von deren axial offener Seite her die Entstördrosseln eindrückbar und durch Überschnappen eines Haltenockens 67 festklemmbar sind.

Die beiden Bürstentragarme 5, 6 werden durch eine Zugfeder 4 an den in Fig. 1 bzw. Fig. 8 schematisch angedeuteten Kommutator über die Bürsten 7, 8 angedrückt. Zur einfachen Montage der Zugfeder 4 sind an die Bürstentragarme 5, 6 axial gerichtete Zapfen 52, 62 angeformt, von deren freien Ende her die Zugfeder 4 mit ösenartigen Enden 41, 42 in gleicher Weise wie die übrigen zu montierenden Bauteile in axialer Richtung aufschiebbar ist, bis die ösenartigen Enden 41, 42 hinter einen – in Fig. 9 für den Bürstentragarm 6 angedeuteten – Rastnocken 621 einrasten. Die von den Bürstentragarmen 5, 6 gehaltenen Bürsten 7, 8 sind nach einer Ausgestaltung der Erfindung als Einlegeteil beim Spritzen der Bürstentragarme 5, 6 miteingespritzt, so dass ein gesondertes Eindrücken der Bürste in eine zuvor lediglich gespritzte Tasche als gesonderter Fertigungs- bzw. Montageschritt entfällt; Fig. 10 zeigt die dreiseitig von einer Wandung 65 umspritzte Bürste 8 des Bürstentragarms 6.

Wie in Fig. 8 angedeutet, werden in vorteilhafter Weise die Bürstentragarme 6, 7 eines Hammer-Bürstenhaltersystems mit den eingespritzten Bürsten 7, 8 als einstückiges Kunststoff-Spritzgussteil mit einem ausbrechbaren Brückensteg 9 hergestellt, der zweckmässigerweise zwischen den zur Aufnahme der Zugfeder 4 vorgesehenen Stifte 52, 62 der Bürstentragarme 5, 6 in einem solchen Abstand a einstückig angeformt ist, dass die Bürsten 7, 8 in einem Abstand fixiert und gehalten werden, der ein Durchführen des Kommutators 1 zwischen ihren kommutatorseitigen Schleifflächen erlaubt. Am durch den Brückensteg 9 in Position gehaltenen Bürstentragarme 5, 6 mit den eingespritzten Bürsten 7, 8 werden nach dem automatisierbarem Eindrücken der Entstördrosseln 11, 12 und Positionieren von Bürstentragarmen und einer Anschlussstrecke, z.B. durch Ultraschallschweissen, die elektrischen Verbindungen hergestellt; anschliessend wird die Zugfeder 4 auf die Stifte 52, 62 bis zu ihrer selbstsperrenden Raststellung aufgesteckt. Dies derart vormontierte Bauteil mit den beiden über den Brückensteg 9 verbundenen Bürstentragarmen 5, 6 wird mit den hülsenförmigen Enden 51, 61 der Bürstentragarme 5, 6 auf die als zylinderförmige Zapfen 31, 32 ausgebildeten Drehpunkte der Bürstenbrücke 3 geschoben bis deren Rastverbindung einschnappt und die Bürstentragarme 5, 6 gegen eine axiale Bewegung auf den Zapfen 31, 32 sichert. Der Brückensteg 9 wird nach der vollkommenen Montage der Bürstenbrücke 3 mit den daran montierten und angeschlossenen Bauteilen und gegebenenfalls vor einem Einschleifvorgang des vollständigen Bürstensystems ausgebrochen, so dass die Bürsten 7, 8 zur Anlage an den Kommutator 1 freigegeben sind.

**Patentansprüche**

1. Hammer-Bürstenhaltersystem für einen Kommutatormotor mit einer am Motorgehäuse befestigten Bürstenbrücke (3), an der mit ihrem einen axialen Ende im Motorinnenraum axial verlaufende Halterungsstifte (31, 32) einstückig angeformt sind, an deren anderem freien Ende jeweils ein Bürstentragarm (5, 6) mit seinem freien, der Bürste abgewandten Ende tangential schwenkbar und axial lagefixierbar gehalten ist, dadurch gekennzeichnet, dass die an die Bürstenbrücke (3) einstückig angeformten Halterungsstifte als Zapfen (31; 32) ausgebildet und die freien, der Bürste (7; 8) abgewandten freien Enden der Bürstentragarme (5; 6) die Zapfen (31; 32) mit einem hülsenförmigen Ende (51, 61) umgreifen und auf die Zapfen (31; 32) von deren freiem Ende her bis zu einer axial lagefixierenden Rastverbindung mit der Bürstenbrücke (3) aufsteckbar sind.

2. Hammer-Bürstenhaltersystem nach Anspruch 1 mit zumindest zwei, jeweils im wesentlichen in einer Ebene schwenkbaren und an gegenüberliegenden Seiten des Kommutators mit ihren bürstenseitigen Enden über Bürsten (7, 8) anliegenden Bürstentragarmen, dadurch gekennzeichnet, dass die beiden Bürstentragarme (5, 6) Teile eines einstückigen Gussteils, insbesondere Kunstsoff-Spritzgussteils, mit einem mitgegossenen, die beiden Bürstentragarme (5; 6) auf bestimmten gegenseitigen Abstand haltenden, ausbrechbaren Brückensteg (9) sind.

3. Hammer-Bürstenhaltersystem nach Anspruch 2, dadurch gekennzeichnet, dass die beiden Bürstentragarme (5; 6) durch den Brückensteg (9) in einem solchen gegenseitigen Abstand
(a) gehalten sind, dass die beiden Bürstentragarme (5, 6) mit ihren ösenartigen Enden (51; 61)
gleichzeitig auf die Zapfen (31; 32) axial aufsteckbar und zwischen ihre bürstenseitigen mit den
Bürsten (7, 8) bestückten Enden der Kommutator
(1) des Läufers des Kommutatormotors axial frei
einführbar ist.

4. Hammer-Bürstenhaltersystem nach Anspruch 2 oder 3, dadurch gekennzeichnet, dass
zwischen den durch den Brückensteg (9) verbundenen Bürstentragarmen (5, 6) eine Zugfeder (4)
zum betriebsmässigen Bürstenandruck der mit den
Bürsten (7, 8) bestückten Enden der Bürstentragarme (5; 6) an den Kommutator (1) gespannt
ist.

5. Hammer-Bürstenhaltersystem nach einem
der Ansprüche 1 bis 4, dadurch gekennzeichnet,
dass an die Bürstentragarme (5; 6) axial verlaufende Stifte (52; 62) mit axial freien Enden angeformt
sind, auf die die Zugfeder (4) mit ösenartig ausgebildeten Enden (41; 42) aufsteckbar und/oder
selbstsperrend aufrastbar gehalten ist.

6. Hammer-Bürstenhaltersystem nach Anspruch 5, dadurch gekennzeichnet, dass der Brükkensteg (9) zwischen den beiden axial verlaufenden Stiften (52; 62) angeordnet ist.

7. Hammer-Bürstenhaltersystem nach einem
der Ansprüche 1 bis 6, mit kunststoffgegossenen
insbesondere kunststoffspritzgegossenen Bürstentragarmen, dadurch gekennzeichnet, dass die
Bürsten (7; 8) an den bürstenseitigen Enden der
Bürstentragarme (5; 6) miteingespritzt sind.

8. Hammer-Bürstenhaltersystem nach einem
der Ansprüche 1 bis 7, dadurch gekennzeichnet,
dass in die Bürstentragarme (5, 6) in axialer Richtung bestückbare Taschen (56; 66) zur Aufnahme
von Entstördrosseln (11; 12) und/oder Kondensatoren (10) eingeformt sind.

9. Hammer-Bürstenhaltersystem nach einem
der Ansprüche 1 bis 8, dadurch gekennzeichnet,
dass die Bürstenbrücke mit den angeformten Zapfen und Rastmitteln zur axialen Festlegung der
montierten Bürstentragarmen bzw. die Bürstentragarme mit den angeformten Taschen, Stiften
und gegebenenfalls zwischengeformten Brückenstegen jeweils als ein mit nur in axialer Richtung
giesstechnisch entformbares und nur in einer axialen Richtung bestückbares Bauteil ausgebildet
sind.

## Claims

1. A hammer-type brush holder system for a
commutator motor with a brush bridge (3) fastened to the motor housing, on which holding-
pins (31, 32), which extend axially in the interior
of the motor are integrally moulded at one of their
axial ends, and on the respective other, free end of
which is held a brush carrier arm (5, 6), with its free
end, that turned away from the brush, tangentially
pivotable and axially fixable in position, *characterised in that* the holding pins (31, 32) integrally moulded onto the bridge (3) are formed as pegs
and the free ends of the brush carrier arms (5, 6)
remote from the brush (7, 8), grasp the pegs (31,
32) with a sleeve-like end (51, 61) and can be
placed onto the pegs (31, 32) from their free ends
to an axially fixed locking connection with the
brush bridge (3).

2. A hammer-type brush holder system as
claimed in Claim 1, with at least two brush carrier
arms (5, 6), each pivotable mainly in one plane and
respectively connected at their ends on the brush
side, to brushes (7, 8) on opposing sides of the
commutator, *characterised in that* both brush carrier arms (5, 6) are parts of an integral casting, in
particular a synthetic injection-moulded component, with a frangible bridge-link (9) forming
part of the moulded component, and holding the
two brush carrier arms (5, 6) at a defined distance
from each other.

3. A hammer-type brush holder system as
claimed in Claim 2, *characterised in that* both
brush carrier arms (5, 6) are held by the bridge-link
(9) at such a distance from each other (a), that the
sleeve-like ends (51, 61) of the two brush carrier
arms (5, 6) can be axially placed simultaneously
onto the pegs (31, 32) and the commutator (1) of
the rotor of the commutator motor can be freely
axially inserted between their ends fitted with
brushes, on the brush (7, 8) side.

4. A hammer-type brush holder system as
claimed in Claim 2 or Claim 3, *characterised in that*
a tension spring (4) is fixed between the brush
carrier arms (5, 6) connected by the bridge-link
(9), to press, in use, the ends of the brush carrier
arm (5, 6), which are fitted with brushes (7, 8)
onto the commutator (1).

5. A hammer-type brush holder system as
claimed in one of Claims 1 to 4, *characterised in
that* the brush carrier arms (5, 6) are formed with
axially extending pins (52, 62) with axially free
ends, on which the tension spring (4) with loop-
shaped ends (41, 42) may be placed and/or held
by a self-locking action.

6. A hammer-type brush holder system as
claimed in Claim 5, *characterised in that* the
bridge-link (9) is positioned between the two
axially extending pins (52, 62).

7. A hammer-type brush holder system as
claimed in one of Claims 1 to 6, with synthetically
moulded, in particular injection-moulded brush
carrier arms, *characterised in that* the brushes (7,
8) on the ends of the brush carrier arms (5, 6) on
the brush side are integrally moulded.

8. A hammer-type brush holder system as
claimed in one of Claims 1 to 7, *characterised in
that* axially fillable pockets (56, 66) are moulded
onto the brush carrier arms (5, 6) to receive interference elimination chokes (11, 12) and/or condensers (10).

9. A hammer-type brush holder system as
claimed in one of Claims 1 to 8, *characterised in
that* the brush bridge with the pegs and locking
devices moulded onto it for the axial fixing of the
assembled brush carrier arms, and the brush carrier
arms with the pockets, pins and if necessary, the bridge-links moulded onto them, are each formed as one component which can be demoulded only in an axial direction, and can only have attachments fitted in an axial direction.

## Revendications

1. Système de porte-balai à marteau pour un moteur à collecteur, comprenant un pont support de balais (3) qui est fixé à la carcasse du moteur et sur lequel sont formées d'un seul tenant, par l'une de leurs extrémités axiales, des tiges de support (31, 32) s'étendant axialement à l'intérieur du moteur et sur l'autre extrémité, libre, de chacune desquelles un bras porte-balai (5, 6) est maintenu pivotant tangentiellement et fixable en position axialement par son extrémité libre éloignée du balai, caractérisé en ce que les tiges de support, formées d'un seul tenant sur le pont à balais (3), sont réalisées comme des tourillons (31, 32) et que les extrémités libres, éloignées des balais (7, 8), des bras porte-balais (5, 6) entourent les tourillons (31, 32) par une extrémité en forme de douille (51, 61) et sont emboîtables sur les tourillons (31, 32), à partir de leur extrémité libre jusqu'à une liaison à cran, fixant la position axiale, avec le pont à balais (3).

2. Système selon la revendication 1 avec au moins deux bras porte-balais qui peuvent pivoter sensiblement dans un plan et s'appliquent par leurs extrémités côté balais contre des côtés opposés du collecteur par des balais (7, 8), caractérisé en ce que les deux bras porte-balais (5, 6) font partie d'une pièce moulée d'un seul tenant, en particulier d'une pièce en matière plastique moulée par injection, pourvue d'une entretoise de pont (9), venue de moulage, maintenant les deux bras porte-balais (5, 6) à une distance déterminée l'un de l'autre et pouvant être arrachée.

3. Système selon la revendication 2, caractérisé en ce que l'entretoise du pont (9) maintient les deux bras porte-balais (5, 6) à une telle distance (a) l'un de l'autre que ces deux bras peuvent être emboîtés simultanément, dans le sens axial, par leurs extrémités en forme de douilles (51, 61), sur les tourillons (31, 32) et que le collecteur (1) du rotor du moteur à collecteur peut être introduit librement, dans le sens axial, entre les extrémités, garnies de balais (7, 8), des bras.

4. Système selon la revendication 2 ou 3, caractérisé en ce qu'un ressort de traction (4) est tendu entre les bras porte-balais (5, 6) pour produire, en service, l'application des extrémités, garnies des balais (7, 8), des bras porte-balais (5, 6) contre le collecteur (1) avec la pression convenable.

5. Système selon une des revendications 1 à 4, caractérisé en ce que des tiges (52, 62), s'étendant axialement, sont formées sur les bras porte-balais (5, 6), tiges qui présentent des extrémités axiales libres sur lesquelles le ressort de traction (4) peut être enfilé et/ou être maintenu avec encliquetage et autoblocage par des extrémités (41, 42) réalisées sous forme d'œillets.

6. Système selon la revendication 5, caractérisé en ce que l'entretoise (9) du pont est disposée entre les deux tiges (52, 62) s'étendant axialement.

7. Système selon une des revendications 1 à 6, avec des bras porte-balais moulés en matière plastique, en particulier moulés par injection en matière plastique, caractérisé en ce que des balais (7, 8) sont incorporés, lors du moulage par injection, aux extrémités côté balais des bras porte-balais (5, 6).

8. Système selon une des revendications 1 à 7, caractérisé en ce que des poches (56, 66) sont formées dans les bras porte-balais (5, 6), poches qui peuvent être garnies en direction axiale et sont destinées à recevoir des bobines d'inductance (11, 12) et/ou des condensateurs (10) d'antiparasitage.

9. Système selon une des revendications 1 à 8, caractérisé en ce que le pont à balais avec les tourillons formés sur lui et avec les éléments d'arrêt pour l'immobilisation axiale des bras porte-balais montés, respectivement les bras porte-balais avec les poches, les tiges et, éventuellement, les entretoises de pont formées sur eux, respectivement entre eux, sont réalisés chaque fois comme une pièce qui, du point de vue technique de moulage, est seulement démontable en direction axiale et qui peut seulement être garnie suivant une direction axiale.

FIG 1

FIG 2

FIG 3

FIG 4

FIG 5

FIG 7

FIG 6

FIG 9

FIG 10

FIG 8